# FASCICULE DE BREVET EUROPEEN

(11) **EP 0 566 471 B1**
(45) Date de publication et mention de la délivrance du brevet: **06.03.1996**
(21) Numéro de dépôt: 93400952.3
(22) Date de dépôt: 13.04.1993
(51) Int. Cl.: B60S 1/34

(54) **Bras d'essuie-glace de véhicule automobile**
Wischerarm für Kraftfahrzeuge
Wiperarm for motor vehicles

(30) Priorité: 14.04.1992 FR 9204560
(43) Date de publication de la demande: 20.10.1993
(73) Titulaire: VALEO SYSTEMES D'ESSUYAGE, F-78180 Montigny-Le-Bretonneux (FR)
(72) Inventeur: Moreau, Jean-Philippe, F-63500 Isssoire (FR)
(74) Mandataire: Gamonal, Didier

(56) Documents cités:
- EP-A- 0 320 220
- US-A- 2 619 668
- US-A- 4 477 940

## Description

La présente invention concerne un bras d'essuie-glace, notamment pour véhicule automobile.

L'invention concerne plus particulièrement un bras d'essuie-glace du tue comportant une chape d'articulation sur une tête d'entraînement et un corps de bras d'essuie-glace qui prolonge longitudinalement la chape et dont l'extrémité libre est reliée à un balai d'essuie-glace.

Selon la conception la plus couramment utilisée, le bras d'essuie-glace est généralement réalisé en trois pièces dont la pièce longitudinale principale est un fer plat qui s'étend dans un plan sensiblement parallèle au plan d'oscillation du bras d'essuie-glace lors de l'essuyage, par exemple d'un pare-brise de véhicule automobile. (Voir, par exemple, US-A-2 619 668).

Etant donné les efforts auxquels est soumis le bras d'essuie-glace lors de l'essuyage, la section transversale du fer plat et le poids de ce dernier sont relativement importants.

De plus, la section transversale rectangulaire du fer plat nécessite le plus souvent l'utilisation d'un élément intermédiaire pour le relier à la chape d'articulation. Enfin, un fer plat ne présente pas des caractéristiques aérodynamiques optimum pour un bon essuyage.

Il est également connu par le document US-A-4,477,940 de remplacer le fer plat par un corps tubulaire reçu dans une portion cylindrique creuse pour y être forcé par brasage ou soudage.

Ce moyen de fixation est très peu sûr dans le sens où les différences de tolérances de fabrication entre les diamètres du corps tubulaire et de la portion cylindrique peuvent faire en sorte que lors de l'opération de brasage ou soudage le corps tubulaire peut se déplacer dans la portion cylindrique creuse et la longueur hors tout du bras d'essuie-glace ne peut plus correspondre à celle désire.

L'invention a pour but de proposer une conception d'un bras d'essuie-glace qui remédie aux inconvénients qui viennent d'être mentionnés tout en lui conservant des caractéristiques mécaniques et une fiabilité satisfaisantes.

Dans ce but, l'invention propose un bras d'essuie-glace du type divulgué dans US-A-4 477 940 et tel que défini dans le préambule de la revendication 1, caractérisé en ce que la portion cylindrique creuse de la chape d'articulation est réalisée sous la forme d'une portion élastiquement déformable radialement pour constituer un collier de serrage de ladite extrémité après l'introduction de cette dernière dans ladite portion.

Selon des modes de réalisation de l'invention :
- la chape d'articulation est réalisée en une seule pièce en tôle découpée et pliée ;
- la portion cylindrique creuse de la chape se prolonge par deux faces ou joues latérales parallèles entre lesquelles s'étend un axe d'articulation de la chape sur la tête d'entraînement du dispositif d'essuie-glace ;
- le corps tubulaire creux comporte un épaulement radial interne agencé au voisinage de la chape d'articulation et qui coopère avec une première extrémité d'un ressort hélicoïdal de compression reçu en partie à l'intérieur du corps creux et dont la seconde extrémité coopère avec une portion en vis à vis de la tête d'entraînement de manière à appliquer au bras d'essuie-glace un couple d'essuyage qui le sollicite en rotation autour de l'axe d'articulation ;
- l'épaulement radial interne est réalisé par déformation radiale vers l'intérieur de la paroi tubulaire du corps longitudinal creux ;
- selon une variante, l'extrémité du corps tubulaire creux reçue dans la chape comporte des moyens pour l'accrochage d'une première extrémité d'un ressort de traction dont l'autre extrémité est accrochée sur une portion de la tête d'entraînement.

D'autres caractéristiques et avantages de l'invention apparaîtront à la lecture de la description détaillée qui va suivre pour la compréhension de laquelle on se reportera au dessin annexé dans lequel :
- La figure 1 est une vue partielle en perspective d'un exemple de réalisation d'un bras d'essuie-glace conformément aux enseignements de l'invention ;
- la figure 2 est une vue en coupe par un plan axial perpendiculaire à l'axe d'articulation du bras d'essuie-glace de la figure 1 ;
- la figure 3 est une vue de détail d'une variante de réalisation du bras d'essuie-glace.

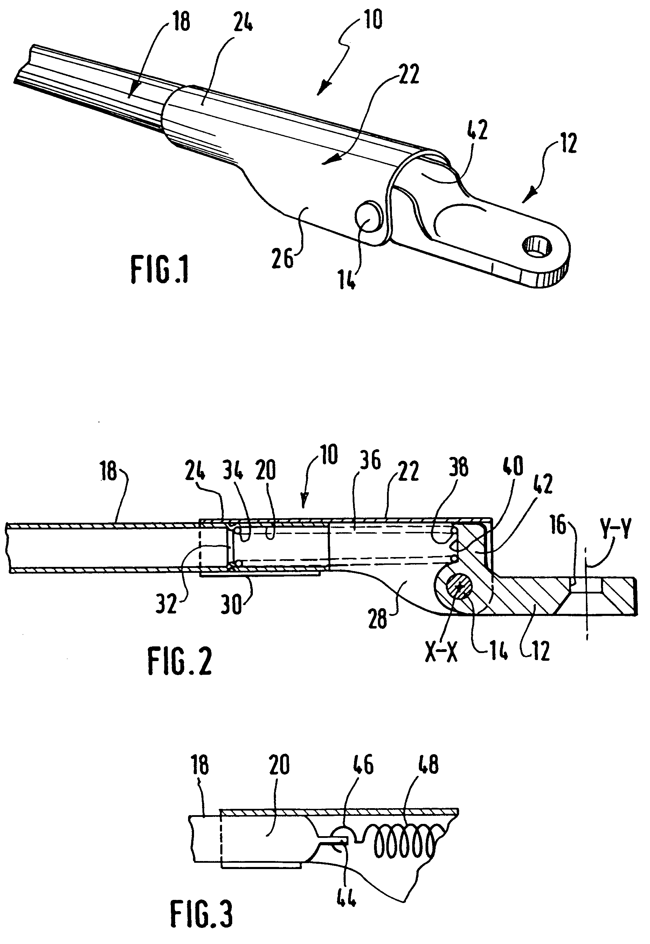

On reconnait aux figures 1 et 2 un bras d'essuie-glace 10 qui est monté articulé par rapport à une tête d'entraînement 12 autour d'un axe d'articulation 14.

L'axe de rotation X-X de l'axe d'articulation 14 s'étend selon une direction sensiblement perpendiculaire à la direction longitudinale générale du bras d'essuie-glace 10 et perpendiculaire à l'axe géométrique Y-Y du perçage 16 qui est prévu pour recevoir un arbre d'entraînement de la tête 12.

Conformément au type de bras d'essuyage selon le préambule de la revendication 1 et divulgué par US-A-4 477 940 le bras d'essuie-glace 10 est constitué pour l'essentiel par un corps longitudinal tubulaire creux 18.

Le corps 18 est par exemple constitué par un tube cylindrique en tôle.

La portion d'extrémité 20 du corps tubulaire 18 est reliée à la tête d'entraînement 12 au moyen d'une chape 22 qui, dans le mode de réalisation illustré aux figures 1 et 2, est une pièce en tôle pliée et découpée.

La chape 22 se compose pour l'essentiel d'une portion avant cylindrique creuse qui se prolonge axialement vers l'arrière par deux joues latérales parallèles 26 et 28 qui sont perpendiculaires à l'axe X-X.

Les joues latérales 26 et 28 reçoivent les extrémités de l'axe d'articulation 14 de manière que la chape 22 soit montée pivotante par rapport à la tête d'entraînement 12 autour de l'axe X-X.

La portion avant cylindrique creuse 24 constitue un collier de serrage de l'extrémité 20 du corps tubulaire 18.

La portion cylindrique 24 peut par exemple comporter à cet effet une fente longitudinale 30 afin de faciliter l'introduction de l'extrémité 20 du corps tubulaire 18 par déformation élastique radiale de la portion cylindrique 24.

La fixation de l'extrémité 20 peut être complétée par une opération de soudage.

La portion d'extrémité 20 comporte un épaulement radial interne 32 qui est réalisé par déformation de la paroi tubulaire du corps longitudinal 18 et qui constitue un appui pour la première extrémité 34 d'un ressort hélicoïdal de compression 36.

La seconde extrémité 38 du ressort hélicoïdal de compression 36 prend appui contre une siège 40 formé dans une portion 42 de la tête d'entraînement 12, située au-dessus de l'axe X-X.

Le ressort hélicoïdal 36 a pour fonction d'appliquer en permanence un couple nominal d'essuyage au bras d'essuie-glace 10, autour de l'axe d'articulation 14, qui le sollicite dans le sens antihoraire en considérant la figure 2.

Dans la variante de réalisation illustrée à la figure 3, l'extrémité 20 du corps longitudinal tubulaire 18 comporte une portion aplatie 44 dans laquelle est accrochée la première extrémité 46 d'un ressort hélicoïdal de traction 48 dont l'aute extrémité (non représentée) est prévue pour être accrochée sur une portion correspondante de la tête d'entraînement afin, selon le même principe que précédemment, d'appliquer au bras d'essuie-glace 10 un couple nominal d'essuyage.

L'extrémité libre (non représentée) du corps tubulaire 18 qui doit être reliée à un balai d'essuie-glace, peut être aplatie, comme dans le cas de l'extrémité 44, afin de lui conférer une section transversale rectangulaire similaire à celle que possède un bras en fer plat, en vue de permettre son accrochage sur le balai d'essuie-glace avec des moyens connus d'accrochage des extrémités des bras en fer plat.

La présente invention n'est pas limitée aux exemples décrits mais englobe toutes autres variantes.

Notamment, les figures décrites jusqu'à maintenant représentent un élément tubulaire creux 18 de forme circulaire et il peut être envisagé que cet élément tubulaire creux puisse présenter, en section, toute autre forme telle que celle offrant un bon effet aérodynamique et en particulier une section oblongue ou en forme de goutte d'eau.

## Revendications

1. Bras d'essuie-glace (10) du type comportant une chape (22) d'articulation sur une tête d'entraînement (12) et un corps (18) tubulaire de bras d'essuie-glace qui prolonge longitudinalement la chape et dont l'extrémité libre est reliée à un balai d'essuie-glace, ladite chape d'articulation (22) comportant une portion cylindrique creuse (24) qui reçoit une extrémité (20) du corps tubulaire creux (18), caractérisé en ce que la portion cylindrique creuse (24) de la chape d'articulation (22) est réalisée sous la forme d'une portion élastiquement déformable radialement pour constituer un collier de serrage de ladite extremité (20) après l'introduction de cette dernière dans ladite portion.

2. Bras d'essuie-glace selon la revendication 1, caractérisé en ce que la chape d'articulation (22) est réalisée en une seule pièce en tôle découpée et pliée.

3. Bras d'essuie-glace selon la revendication 1 ou 2, caractérisé en ce que la portion cylindrique creuse (24) de la chape d'articulation (22) se prolonge par deux faces latérales parallèles (26, 28) entre lesquelles s'étend un axe (14) d'articulation de la chape d'articulation (24) sur la tête d'entraînement (12) du dispositif d'essuie-glace.

4. Bras d'essuie-glace selon l'une quelconque des revendications précédentes, caractérisé en ce que le corps tubulaire creux (18) comporte un épaulement radial interne (32) agencé au voisinage de la chape d'articulation (22) et qui coopère avec une première extrémité (34) d'un ressort hélicoïdal de compression (36) reçu en partie à l'intérieur du corps tubulaire creux et dont la seconde extrémité (38) coopère avec une portion en vis-à-vis (40) de la tête d'entraînement (12) de manière à appliquer au bras d'essuie-glace (10) un couple d'essuyage qui le sollicite en rotation autour de l'axe d'articulation (14).

5. Bras d'essuie-glace selon la revendication 4, caractérisé en ce que l'épaulement radial interne (32) est réalisé par déformation radiale vers l'intérieur de la paroi tubulaire du corps longitudinal creux (18).

6. Bras d'essuie-glace selon l'une quelconque des revendications 1 à 3, caractérisé en ce que l'extrémité (20) du corps tubulaire creux (18) reçue dans la chape d'articulation comporte des moyens (44) pour l'accrochage d'une première extrémité (46) d'un ressort hélicoïdal de traction (48) dont l'autre extrémité est accrochée sur une portion de la tête d'entraînement de manière à appliquer au bras d'essuie-glace (10) un couple d'essuyage qui le sollicite en rotation autour de l'axe d'articulation.

## Claims

1. Windscreen wiper arm (10) of the type having a shell (22) pivoted on a drive head (12) and a tubular wiper arm body (18) which extends the shell longitudinally and the free end of which is connected to a wiper blade, the said pivoting shell (22) having a hollow cylindrical portion (24) which receives one end (20) of the hollow tubular body (18), characterised in that the hollow cylindrical portion (24) of the pivoting shell (22) is produced in the form of a portion which is elastically deformable radially in order to constitute a collar for clamping the said end (20) after the latter is inserted into the said portion.

2. Windscreen wiper arm according to Claim 1, characterised in that the pivoting shell (22) is produced in a single piece from sheet metal which has been cut out and folded.

3. Windscreen wiper arm according to Claim 1 or 2, characterised in that the hollow cylindrical portion (24) of the pivoting shell (22) is extended by two parallel lateral faces (26, 28) between which extends a spindle (14) by which the pivoting shell (24) pivots on the drive head (22) of the windscreen wiper device.

4. Windscreen wiper arm according to any one of the preceding claims, characterised in that the hollow tubular body (18) has an internal radial shoulder (32) arranged in the vicinity of the pivoting shell (22) and which cooperates with a first end (34) of a helical compression spring (36) partly received inside the hollow tubular body and the second end (38) of which cooperates with a facing portion (40) of the drive head (12) so as to apply to the windscreen wiper arm (10) a wiping torque which acts on it in rotation about the pivot spindle (14).

5. Windscreen wiper arm according to Claim 4, characterised in that the internal radial shoulder (32) is produced by deforming the tubular wall of the hollow longitudinal body (18) radially inwards.

6. Windscreen wiper arm according to any one of Claims 1 to 3, characterised in that the end (20) of the hollow tubular body (18) received in the pivoting shell has means (44) for attaching a first end (46) of a helical draw spring (48), the other end of which is attached to a portion of the drive head so as to apply to the windscreen wiper arm (10) a wiping torque which acts on it in rotation about the pivot spindle.

## Patentansprüche

1. Wischerarm (10) in der Ausführung mit einem Gabelgelenk (22) an einem Antriebskopf (12) und einem rohrförmigen Wischerarmkörper (18), der in Längsrichtung das Gabelgelenk verlängert und dessen freies Ende mit einem Wischerblatt verbunden ist, wobei das besagte Gabelgelenk (22) einen hohlzylindrischen Abschnitt (24) umfaßt, der ein Ende (20) des rohrförmigen Hohlkörpers (18) aufnimmt , **dadurch gekennzeichnet,** daß der hohlzylindrische Abschnitt (24) des Gabelgelenks (22) in Form eines radial elastisch verformbaren Abschnitts ausgeführt ist, um einen Klemmbügel für das Festklemmen des besagten Endes (20) nach seiner Einführung in den besagten Abschnitt (24) zu bilden.

2. Wischerarm nach Anspruch 1 **,dadurch gekennzeichnet,** daß das Gabelgelenk (22) einstückig aus gestanztem und gebogenem Blech ausgeführt ist.

3. Wischerarm nach Anspruch 1 oder 2 , **dadurch gekennzeichnet,** daß der hohlzylindrische Abschnitt (24) des Gabelgelenks (22) durch zwei parallele Seitenflächen (26, 28) verlängert wird, zwischen denen sich ein Gelenkbolzen (14) für die Anlenkung des Gabelgelenks (24) am Antriebskopf (12) des Scheibenwischers erstreckt.

4. Wischerarm nach einem der vorangehenden Ansprüche, **dadurch gekennzeichnet,** daß der rohrförmige Hohlkörper (18) eine radiale Innenschulter (32) umfaßt, die in der Nähe des Gabelgelenks (22) angeordnet ist und die mit einem ersten Ende (34) einer Schraubendruckfeder (36) zusammenwirkt, die teilweise im Innern des rohrförmigen Hohlkörpers eingesetzt ist und deren zweites Ende (38) mit einem dem Antriebskopf (12) gegenüberliegenden Abschnitt (40) zusammenwirkt, um auf den Wischerarm (10) ein Wischmoment anzuwenden, das ihn drehend um den Gelenkbolzen (14) beansprucht.

5. Wischerarm nach Anspruch 4 , **dadurch gekennzeichnet,** daß die radiale Innenschulter (32) durch radiale Verformung der rohrförmigen Wand des Längshohlkörpers (18) nach innen ausgeführt ist.

6. Wischerarm nach einem der Ansprüche 1 bis 3 , **dadurch gekennzeichnet,** daß das Ende (20) des rohrförmigen Hohlkörpers (18), das in das Gabelgelenk eingesetzt ist, Mittel (44) für die Anbringung eines ersten Endes (46) einer Schraubenzugfeder (48) umfaßt, deren anderes Ende an einem Abschnitt des Antriebskopfes angebracht ist, um auf den Wischerarm (10) ein Wischmoment anzuwenden, das ihn drehend um den Gelenkbolzen beansprucht.
